# EUROPÄISCHE PATENTANMELDUNG

(11) **EP 0 612 637 A1**
(43) Veröffentlichungstag der Anmeldung: **31.08.1994**
(21) Anmeldenummer: 94101917.6
(22) Anmeldetag: 08.02.1994
(51) Int. Cl.: B60J 5/06, B62D 25/18

(54) **Schiebetür für eine LKW-Fahrerkabine**

(30) Priorität: 16.02.1993 DE 9302226 U
(71) Anmelder: EDELHOFF POLYTECHNIK GMBH & CO., D-58605 Iserlohn (DE)
(72) Erfinder: Bartsch, Günter, D-86167 Augsburg (DE)
(74) Vertreter: Laufhütte, Dieter, Dr.-Ing.

(57) **Zusammenfassung**

Die Erfindung betrifft eine Schiebetür (1) für eine LKW-Fahrerkabine (2).

Zur Lösung der Aufgabe, eine Schiebetür derart weiterzubilden, daß sie in einfacher Art und Weise aus einer serienmäßigen LKW-Tür umgerüstet werden kann, ist die Tür über zwei fahrzeugseitige Führungsschienen (4,10) und in diesen laufenden türseitigen Roll- bzw. Gleitelementen gelagert und geführt und über eine außen am Fahrzeug angeordnete Führungsschiene (3) lediglich geführt.

## Beschreibung

Die Erfindung betrifft eine Schiebetür für eine LKW-Fahrerkabine.

Obwohl der Großteil der produzierten Lastkraftwagen mit Schwenktüren ausgestattet ist, besteht gerade für Anwender im kommunalen Bereich eine große Nachfrage an modifizierten LKW-Fahrerkabinen mit Schiebetüren. Dies ist darin begründet, daß oftmals - bedingt durch enge bauliche Verhältnisse in den jeweiligen Siedlungen - Schwenktüren denkbar ungeeignet sind, wenn der Fahrer häufig ein- und aussteigen muß. Weiterhin besteht bei Schwenktüren eine Unfallgefahr, da Autofahrer, Radfahrer oder auch Passanten beim unbedachten Öffnen der Tür verletzt werden können.

Grundsätzlich sind Schiebetüren für LKW-Fahrerkabinen schon bekannt. Bei den eingesetzten Schiebetüren handelt es sich aber um Sonderausführungen, bei denen eine gerade Unterseite der Schiebetür vorhanden sein muß, da die Schiebetür eine nach unten geöffnete U-förmige Aussparung zur Führung aufweist. Diese nach unten geöffnete U-förmige Aussparung sorgt für eine Führung und Lagerung durch einen am Fahrerhaus angebrachten Steg. Diese Anordnung dient gleichzeitig als Labyrinthabdichtung.

Die obere Führung und Lagerung wird von einer Rollenführung übernommen. Beide Führungen sind im wesentlichen so ausgebildet, daß sich in der Schließstellung ein Anpreßdruck der Tür gegen die Dichtung ergibt, d.h. die Führungen verlaufen zum Fahrzeuginneren hin, wobei sie, in Fahrtrichtung gesehen, vorne parallel zu den seitlichen Begrenzungsflächen der Fahrerkabine verlaufen.

Da während der Fahrt eines Lastkraftwagens in der Fahrerkabine ein Überdruck entsteht, müssen die dann auftretenden Kräfte auf die Tür aufgefangen werden. Dies erfolgt bei der herkömmlichen Schiebetür durch die Ausgestaltung der Führungselemente und ein extra dafür konzipiertes Schloßsystem. Dieses Schloßsystem arretiert und verriegelt nicht wie in üblicher Weise nur an der B-Säule, sondern sowohl an der A- wie auch an der B-Säule. Es ist daher auch eine völlige Neukonstruktion des Schloß- bzw. Verriegelungssystems notwendig.

Diese umfangreichen und komplexen baulichen Veränderungen führen dazu, daß ein Komplettumbau einer vorhandenen LKW-Fahrerkabine sehr kostenintensiv ist. Weiterhin müssen bei Beschädigungen der Türen vollständig neue Türen angefertigt werden. Es kann also nicht auf serienmäßige LKW-Türen zurückgegriffen werden, wodurch eine eigene Lagerhaltung von Schiebetüren notwendig wird.

Ausgehend von dieser Problematik stellt sich die Aufgabe, eine gattungsgemäße Schiebetür derart weiterzubilden, daß sie in einfacher Art und Weise aus einer serienmäßigen LKW-Tür umgerüstet werden kann.

Diese Aufgabe wird dadurch gelöst, daß die Tür in zwei fahrzeugseitigen Führungsschienen und in diesen laufenden türseitigen Roll- bzw. Gleitelementen gelagert und geführt und in einer außen an der Fahrerkabine angebrachten Führungsschiene lediglich geführt wird.

Gemäß einer vorteilhaften Ausgestaltung für eine Schiebetür für eine LKW-Fahrerkabine, bei der ein Teil der Tür über den Kotflügel heruntergezogen ist, kann der fahrzeugseitige Kotflügel geteilt sein und ein Teil des Kotflügels kann an der Schiebetür befestigt und mit dieser bewegbar sein.

An der Schiebetür kann ein Schloß angeordnet sein, das nur mit der B-Säule der Fahrerkabine in Eingriff geht, während am in Fahrtrichtung vorderen Ende der Schiebetür mindestens ein Zapfen angeordnet ist, der mit einer entsprechenden Ausnehmung in der A-Säule in Eingriff bringbar ist.

Zwei fahrzeugseitige Führungsschienen können im Inneren der Fahrerkabine angeordnet sein, wobei beide Führungsschienen in Fahrtrichtung gesehen eine Kurvenbahn in Richtung zum Fahrzeuginneren beschreiben, so daß die Schiebetür über ihre Roll- bzw. Gleitelemente beim Schließen der Tür gegen entsprechende Dichtungen preßbar ist.

Weitere Vorteile und Einzelheiten der Erfindung werden anhand eines in der Zeichnung dargestellten Ausführungsbeispiels näher erläutert. Dabei zeigen:
- Fig. 1:: eine LKW-Fahrerkabine mit geschlossener Schiebetür in Seitenansicht,
- Fig. 2:: die in Fig. 1 dargestellte LKW-Fahrerkabine mit geöffneter Schiebetür,
- Fig. 3:: die in den Fig. 1 und 2 dargestellte LKW-Fahrerkabine in Schnittdarstellung mit den entsprechenden Führungs- und Lagerelementen,
- Fig. 4:: eine schematische Darstellung der in Fig. 3 enthaltenen oberen Führungsschiene und
- Fig. 5:: eine schematische Darstellung der Fig. 3 dargestellten unteren Führungsschiene.

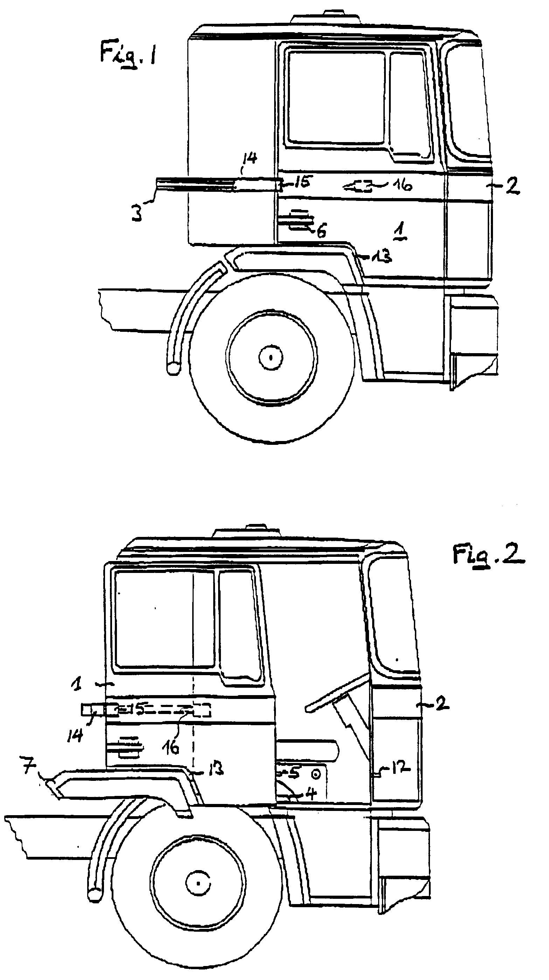

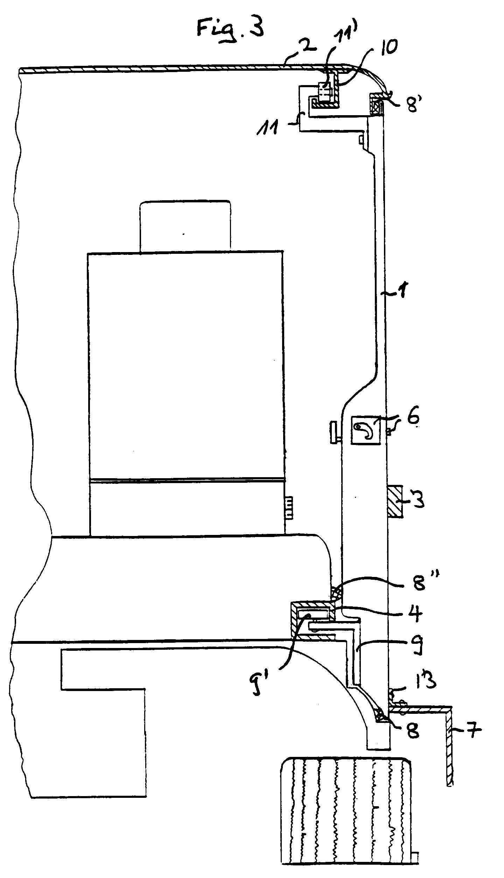

Eine LKW-Fahrerkabine 2, die ursprünglich mit einer schwenkbaren serienmäßigen LKW-Tür ausgestattet war, weist eine gemäß der vorliegenden Erfindung umgebaute LKW-Tür 1 auf, die nunmehr verschiebbar gelagert ist. In der Fig. 1 ist diese verschiebbare LKW-Tür 1 in geschlossener Position und in Fig. 2 ist diese verschiebbare LKW-Tür 1 in geöffneter Position dargestellt.

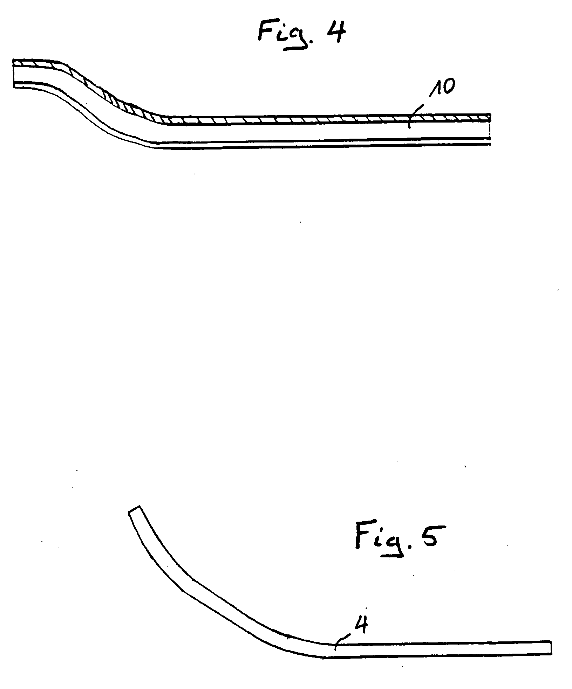

Die verschiebbare LKW-Tür ist im wesentlichen dreifach gelagert. Zum einen weist die LKW-Tür 1 ein Halteelement 11 auf, das aus einem U-förmigen Rohr besteht, das an der in Fahrtrichtung vorne liegenden oberen Ecke der LKW-Tür 1 angeschraubt ist. Dieses Halteelement 11 läuft über eine Rolle 11 in einer im Innern des Dachs der Fahrerkabine 2 angeordneten winkelförmig gebogenen Führungsschiene 10. Im unteren Türbereich ist an einem an der Tür 1 angesetzten Winkel 9 ebenfalls eine Rolle 9' gelagert, die in einer entsprechenden fahrzeugseitigen Führungsschiene, die im Inneren der Fahrerkabine 2 angeordnet ist (vgl. Fig. 3) läuft. Anhand der zuvor beschriebenen Elemente wird die Tür 1 gelagert und geführt. Zur zusätzlichen Führung dient eine Führungsschiene 3, in der ein waagerecht verschiebbares Gelenkelement 14 läuft, das mit einem an der Tür 1 fest verbundenen Element 15 schwenkbar verbunden ist. Die Führungsschiene 3 ist an der Außenseite der Fahrerkabine 2 angeordnet, wie dies insbesondere in Fig. 1 zu sehen ist.

Eine Sicherung der Tür im geschlossenen Zustand erfolgt an der A-Säule durch einen in einer Aussparung 12 eingreifenden, an der Tür angebrachten Zapfen 5, der vorzugsweise kegelförmig geformt ist, sowie durch einen mit der B-Säule in Eingriff gehendes Schloß 6. Ein an der Innentür sitzender Zapfen 16 greift, bei geöffnetem Zusand der Tür, in ein an der Führungsschiene 3 integriertes Gegenstück zur zusätzlichen Sicherung.

Der Kotflügel der Vorderräder ist, wie in den Fig. 1 und 2 dargestellt, geteilt. Ein Teil 7 des Kotflügels ist über ein L-Profil 13 an der Tür angesetzt, so daß dieser mit der Tür vor- und zurückgeschwenkt werden kann. Daher muß die Tür nicht seitlich über den Kotflügel hinaus verschwenkt werden, falls sie in Fahrtrichtung vor dem Kotflügel sich nach unten über diesen hinaus erstreckt, wie das bei serienmäßigen schwenkbaren Türen üblicherweise der Fall ist.

Eine Abdichtung der Tür erfolgt, wie auch bei Serienmodellen mit schwenkbarer Tür, durch die original eingesetzten Dichtungen 8, 8' und 8'' (vgl. Fig. 3).

Die Fig. 4 zeigt die Formgebung der oberen Führungsschiene 10. Diese befindet sich in Eingriff mit dem Halteelement 11, das - wie zuvor beschrieben - fest mit der Tür 1 verbunden ist. Die Führungsschiene 10 beschreibt - in Fahrtrichtung gesehen - eine Kurvenbahn zum Fahrzeuginneren. Am Ende läuft die Führungsschiene wieder parallel zu den seitlichen Begrenzungsflächen der Fahrerkabine 2. Durch diese Kurvenbahn wird sichergestellt, daß die Tür in der Schließstellung über den Halter 11 gegen eine Dichtung 8' gedrückt wird.

Fig. 5 zeigt den Verlauf der unteren Führungsschiene 4, die mit dem Führungselement 9 in Verbindung steht. Diese Führungsschiene beschreibt ebenfalls, ähnlich wie die Führungs- und Lagerschiene 10 in Fahrtrichtung gesehen vorderen Bereich einen Kurvenverlauf zum Inneren der Fahrzeugkabine hin. Damit wird auch durch diese Führungsschiene die Tür beim Zusteuern gegen die Dichtung 8 gepreßt.

## Patentansprüche

1. Schiebetür für eine LKW-Fahrerkabine,
**dadurch gekennzeichnet**,
daß die Tür über zwei fahrzeugseitige Führungsschienen und in diesen laufenden türseitigen Roll- bzw. Gleitelementen gelagert und geführt und über eine außen am Fahrzeug angeordnete Führungsschiene lediglich geführt wird.

2. Schiebetür für eine LKW-Fahrerkabine, wobei ein Teil der Tür über den seitlichen Vorderradkotflügel heruntergezogen ist, nach Anspruch 1, dadurch gekennzeichnet, daß der fahrzeugseitige Kotflügel geteilt ist und daß ein Teil des Kotflügels an der Schiebetür befestigt ist und mit dieser bewegbar ist.

3. Schiebetür nach Anspruch 1 oder 2, dadurch gekennzeichnet, daß an der Schiebetür ein Schloß angeordnet ist, das nur mit der B-Säule der Fahrerkabine in Eingriff geht, während am in Fahrtrichtung vorderen Ende der Schiebetür mindestens ein Zapfen angeordnet ist, der mit einer entsprechenden Ausnehmung in der A-Säule in Eingriff bringbar ist.

4. Schiebetür nach einem der Ansprüche 1 bis 3, dadurch gekennzeichnet, daß zwei fahrzeugseitige Führungsschienen im Inneren der Fahrerkabine angeordnet sind, wobei beide Führungsschienen in Fahrtrichtung gesehen eine Kurvenbahn in Richtung zum Fahrzeuginneren beschreiben, so daß die Schiebetür über ihre Roll- bzw. Gleitelemente beim Schließen der Tür gegen entsprechende Dichtungen preßbar ist.
